# EUROPÄISCHE PATENTSCHRIFT

(11) **EP 4 480 627 B1**
(45) Veröffentlichungstag und Bekanntmachung des Hinweises auf die Patenterteilung: **04.03.2026**
(21) Anmeldenummer: 24182285.7
(22) Anmeldetag: 14.06.2024
(51) Int. Cl.: B23K 26/03, B23K 26/386

(54) **VERFAHREN ZUR HERSTELLUNG UND PRÜFUNG EINER SOLLBRUCHLINIE IN EINEM FAHRZEUGINNENVERKLEIDUNGSTEIL**
METHOD FOR PRODUCING AND TESTING A BREAK LINE IN A VEHICLE INTERIOR TRIM PART
PROCÉDÉ DE FABRICATION ET DE CONTRÔLE D'UNE LIGNE DE RUPTURE DANS UN ÉLÉMENT D'HABILLAGE INTÉRIEUR DE VÉHICULE

(30) Priorität: 16.06.2023 DE 102023115790
(43) Veröffentlichungstag der Anmeldung: 25.12.2024
(73) Patentinhaber: JENOPTIK Automatisierungstechnik GmbH, 07745 Jena (DE)
(72) Erfinder: Bode-Mosig, Andreas, 07747 Jena (DE)
(74) Vertreter: Gleim Petri Patent- und Rechtsanwaltspartnerschaft mbB

(56) Entgegenhaltungen:
- EP-A1- 3 321 024
- EP-A1- 4 104 964

## Beschreibung

Die Erfindung betrifft ein Verfahren zum Herstellen einer Sollbruchlinie in ein Fahrzeuginnenverkleidungsteil und zur Überprüfung dessen Kontur und Lage.

Das Verfahren wird mit einer Vorrichtung durchgeführt, die eine Sensormatrix und eine Laserscaneinrichtung enthält, mit der während der Herstellung der Sollbruchlinie ein über das Fahrzeuginnenverkleidungsteil entlang der Sollbruchlinie scannender Laserstrahl Material abträgt, bis durch Einzelsensoren der Sensormatrix ein durch das Fahrzeuginnenverkleidungsteil transmittierender Anteil des Laserstrahls detektiert wird.

Es sei vorangestellt, dass im Sinne dieser Beschreibung als Sollbruchlinie eine Linie bezeichnet wird, entlang der die Sollbruchlinie erzeugt wird, unabhängig vom Bearbeitungszustand.

Die Herstellung von Sollbruchlinien mittels Laser, in Fahrzeuginnenverkleidungsteile, z. B. für Airbag-Öffnungen im Armaturenbrett, in der Türverkleidung oder in der Lenkradnabe oder als Bruchstellen an in den Fahrgastraum ragenden Bauteilen, wie z. B. Tassenhaltern, ist seit Langem bekannt. Aufgrund der hohen Anforderungen zum einen an deren zuverlässiges Aufbrechen im Bedarfsfall und zum anderen an ein ästhetisches Erscheinungsbild der Ausstattungsteile, bei dem ein Fahrzeuginsasse die Sollbruchöffnungen mit bloßem Auge nicht wahrnehmen soll, erfolgt ein Materialabtrag entlang einer die Sollbruchöffnung umschreibenden Sollbruchlinie sensorüberwacht bzw. sensorgesteuert.

Auch bei anderen Anwendungen, z. B. in der Verpackungsindustrie, ist es bekannt, Sollbruchlinien mittels Laser als Auftrennhilfe in Behältern u.ä. einzubringen.

Um eine Sollbruchlinie durch Materialabtrag mittels Laser herzustellen, werden in das betreffende Fahrzeuginnenverkleidungsteil entlang einer vorgegebenen Linie nicht vollständig durchtrennende Schlitze oder Löcher bzw. so genannte Mikroperforationslöcher, die das Fahrzeuginnenverkleidungsteil nur mit einem sehr kleinen Loch durchdringen, eingebracht. Durch die Sensorüberwachung bzw. Sensorsteuerung können hierbei entweder eine reproduzierbare, verbleibende Restwandstärke oder kleine Löcher mit einem reproduzierbaren Durchmesser entlang der Linie, die Sollbruchlinie bildend, hergestellt werden, indem bei Detektion von durch die Restwand oder das Loch transmittierender Strahlungsenergie die Überschreitung eines vorgegebenen Schwellwertes als Steuergröße verwendet wird. Dazu ist wenigstens ein Sensor auf einer dem Laser gegenüberliegenden Seite des Fahrzeuginnenverkleidungsteiles (Sichtseite) angeordnet, der während der Bearbeitung einen transmittierenden Anteil der Bearbeitungslaserstrahlung dann detektiert, wenn das Fahrzeuginnenverkleidungsteil innerhalb der Sollbruchlinie am jeweiligen Bearbeitungspunkt nur noch eine bestimmte Restwandstärke oder bereits ein Mikroloch aufweist. Die erforderliche Relativbewegung zur Erzeugung von Sollbruchlinien kann grundsätzlich durch den Laserstrahl als Werkzeug oder das Fahrzeuginnenverkleidungsteil, bei feststehendem Werkzeug erzeugt werden, wobei sich ein Verfahren mit Bewegung des Laserstrahls als einfacher zu realisieren ergeben hat. Dabei ist im Vergleich zu einer robotergesteuerten Führung einer Laserquelle oberhalb und entlang der Sollbruchlinie ein zwei- bzw. dreidimensionales Scannen eines Laserstrahls entlang der Sollbruchlinie technisch einfach umsetzbar und erlaubt darüber hinaus eine deutlich schnellere Bearbeitung.

Die DE 10 2005 026 906 A1 offenbart ein Innenverkleidungsteil für Fahrzeuge und ein Verfahren zum Herstellen eines solchen Innenverkleidungsteils. Eine Vorrichtung zur Durchführung des Verfahrens weist einen Laser mit einer Fokussieroptik sowie ein Scannerspiegelsystem auf. Ein Fokus eines von dem Laser erzeugten Laserstrahls liegt in einer Tiefe im Innenverkleidungsteil, wobei an dem Fokus Material abgetragen wird.

Aus der DE 10 2005 054 607 A1 ist ein Verfahren zur Bestimmung einer Restschichtdicke bei der Ausbildung von Sacklöchern oder Schnittfugen in Bauteilen bekannt, bei dem Sacklöcher oder Schnittfugen mittels Laserstrahlung ausgehend von einer Seite eines Bauteils ausgebildet werden und an der gegenüberliegenden Oberfläche des Bauteils die Temperatur berührungslos mittels von dieser Oberfläche emittierter elektromagnetischer Strahlung bestimmt und damit die Restschichtdicke im jeweiligen Bearbeitungsbereich der Laserstrahlung ermittelt wird.

Ein in der Patentschrift EP 1 118 421 B1 offenbartes Verfahren beschreibt die Herstellung einer aus Perforationslöchern bestehenden Sollbruchlinie mittels gepulster oder kontinuierlicher Laserstrahlung. Der Laserstrahl wird mittels einer Bearbeitungsoptik auf die Rückseite eines Fahrzeuginnenverkleidungsteils gerichtet. Gegenüberliegend, auf der Vorderseite des Fahrzeuginnenverkleidungsteils, befindet sich ein Sensor im Strahlengang des Lasers, das heißt auf der optischen Achse der Bearbeitungsoptik. Während einer Relativbewegung zwischen Fahrzeuginnenverkleidungsteil und Bearbeitungsoptik entlang einer zu erzeugenden Sollbruchlinie gibt der Laser eine begrenzte Folge von sich am Fahrzeuginnenverkleidungsteil teilweise überlagernden Einzelpulsen oder eine kontinuierliche Laserstrahlung von begrenzter Dauer ab. Dabei wird im Fahrzeuginnenverkleidungsteil ein Schlitz mit einer kontinuierlich abnehmenden Restwandstärke geschaffen. Die Laserstrahlung wird unterbrochen, sobald mit dem Sensor auf der Vorderseite ein Durchbruch der Laserstrahlung detektiert wird. Soll die erforderliche Relativbewegung durch den Laser durchgeführt werden, muss eine hochgenaue Mitführung des Sensors realisiert werden, damit die Sensorachse und die optische Achse der Bearbeitungsoptik stets zusammenfallen.

Auch gemäß der EP 0 827 802 B1 wird ein definierter Materialabtrag bis auf eine verbleibende Restwandstärke (Materialdicke) gesichert, indem von der Außenseite her durch einen Sensor die transmittierende Strahlung am Bearbeitungsort detektiert wird. Zu diesem Zweck muss der Sensor auf der optischen Achse des auf das Fahrzeuginnenverkleidungsteil gerichteten Laserstrahls angeordnet sein. Zur Realisierung der zur Erzeugung der Sollbruchlinie notwendigen Relativbewegung zwischen dem Laserstrahl und dem Fahrzeuginnenverkleidungsteil sind hier keine Ausführungen gemacht.

Durch die EP 3 321 024 A1 sind ein Verfahren und eine Vorrichtung zur Herstellung einer Schwächungslinie in ein flächenhaftes Werkstück entlang einer vorgegebenen Kontur durch Materialabtrag mittels Laser offenbart. Bei dem Verfahren wird ein Werkstück in einem Arbeitsfeld zwischen einer Anordnung von Sensoren und einem Laserscanner angeordnet. Der Laserscanner scannt einen gepulsten Laserstrahl über eine Rückseite des flächenhaften Werkstücks, entlang einer Schwächungslinie, wobei ein Materialabtrag in Form von Löchern jeweils bis zu einer vorgegebenen Restwandstarke an einer Vielzahl von Abtragsorten entlang der Schwächungslinie bewirkt wird. Durch einzelne Sensoren werden während des Materialabtrages durch an den Abtragsorten transmittierende Anteile des Laserstrahls erzeugte Messsignale erfasst. In der Folge wird ein Vergleichssignal gebildet, das mit einem Referenzsignal, dem die vorgegebene Restwandstarke zugeordnet ist, verglichen wird. Der die Laserpulse generierende Lasergenerator wird so angesteuert, dass auf die Abtragsorte jeweils nur solange Laserpulse auftreffen, bis die vorgegebene Restwandstärke erreicht ist. Die transmittierende Laserstrahlungsleistung eines Laserpulses wird dann detektiert, wenn sie oberhalb eines unteren Grenzwertes des Empfindlichkeitsbereiches des Sensors liegt und die Schwächungslinie kann innerhalb eines Sichtfeldes der Anordnung von Sensoren beliebig positioniert werden.

In der DE 10 2007 024 510 B3 ist eine Vorrichtung mit einer auf der Außenseite des zu bearbeitenden Fahrzeuginnenverkleidungsteils angeordneten Sensor offenbart, dessen Messbereich die vollständige Sollbruchlinie erfasst. Der Sensor ist hier eine Matrixkamera, deren Pixel einzeln auslesbar sind. Eine zugehörige Steuer- und Recheneinheit ist mit dem Sensor und einem Lasergenerator, der die Bearbeitungslaserstrahlung generiert, signaltechnisch verbunden. Die Steuer- und Recheneinheit ist dazu ausgelegt, die Ortsdaten der Pixel der Matrixkamera den einzelnen Bearbeitungsorten zugeordnet abzuspeichern, um während der Bearbeitung nur die Pixel auszulesen, die dem jeweils relevanten Bearbeitungsort zugeordnet sind.

Entsprechend exakt muss das Fahrzeuginnenverkleidungsteil zum Sensor ausgerichtet positioniert werden, damit die einzelnen Bearbeitungsorte entlang der Sollbruchlinie zu den jeweils zugeordneten Pixeln eine vorbestimmte Relativlage einnehmen.

Gemäß dem in der vorgenannten DE 10 2007 024 510 B3 beschriebenen Verfahren wird eine Sollbruchlinie in einem Fahrzeuginnenverkleidungsteil hergestellt, indem ein Laserstrahl auf eine Innenseite eines in einer Halteeinrichtung ortsfest gehaltenen Fahrzeuginnenverkleidungsteils gerichtet, entlang einer Sollbruchlinie geführt wird und ein Materialabtrag in Form von Löchern mit einer Restwandstärke an einer Vielzahl von Bearbeitungsorten entlang der Sollbruchlinie bewirkt wird. Dabei werden von vorbestimmten Pixeln eines den vollständigen Verlauf der Sollbruchlinie auf der Außenseite des Fahrzeuginnenverkleidungsteils erfassenden, ortsfesten Sensor Messwerte erfasst, die äquivalent für die Restwandstärke sind. In Abhängigkeit von den Messwerten wird im Vergleich mit wenigstens einem Referenzmesswert ein den Laserstrahl emittierender Lasergenerator gesteuert. Wesentlich für das in der vorgenannten DE 10 2007 024 510 B3 offenbarte Verfahren ist, dass zur Bestimmung der Messwerte nur vorbestimmte Pixel einer Matrixkamera ausgelesen werden. Dabei sind die vorbestimmten Pixel die Pixel die den einzelnen Bearbeitungsorten jeweils als empfangsfähige Pixel zugeordnet abgespeichert sind.

Vorteilhaft gegenüber den beschriebenen Verfahren ist es bei einem Verfahren gemäß der EP 10 2021 115 496 nicht notwendig das zu bearbeitende Fahrzeuginnenverkleidungsteil exakt gegenüber einer Sensoranordnung zu positionieren. Hier wird das Fahrzeuginnenverkleidungsteil in einer Arbeitsebene zwischen einer Sensormatrix und einer Laserscaneinrichtung angeordnet und ein Laserstrahl wird entlang der Sollbruchlinie gescannt, wobei ein Materialabtrag in Form von Löchern jeweils bis zu einer vorgegebenen Restwandstärke an jeweils einem Bearbeitungsort entlang der Sollbruchlinie bewirkt wird. Ein transmittierender Anteil des Laserstrahles verursacht nacheinander an jeweils einem der Bearbeitungsorte Einzelmesswerte für Einzelsensoren der Sensormatrix. Aus zeitgleich erfassten Einzelmesswerten wird jeweils ein Gesamtmesswert gebildet, der mit jeweils einem Gesamtreferenzwert verglichen wird, dem die vorgegebene Restwandstärke zugeordnet ist. Wenn jeweils der Gesamtmesswert den Gesamtreferenzwert erreicht hat, wird der Laserstrahl abgeschaltet. Eine Besonderheit des hier offenbarten Verfahrens besteht darin, dass zu Beginn des Verfahrens die Ist-Position des Fahrzeuginnenverkleidungsteils in einem Koordinatensystem bezogen auf den Laserscanner über eine Kamera, deren Relativlage im Koordinatensystem bekannt ist, ermittelt wird, um die gespeicherten Koordinaten für die Sollbruchlinie auf die reale Lage des Fahrzeuginnenverkleidungsteils anzupassen. Aus den Messwerten der Sensormatrix kann nur auf die Restwandstärke entlang der Sollbruchlinie geschlossen werden.

Es ist die Aufgabe der Erfindung ein Verfahren zu finden, bei dem die verbleibende Restwandstärke in einer Sollbruchlinie mittels einer Sensormatrix überwacht wird und ohne zusätzliche Erfassungsmittel die Kontur und die Lage der Sollbruchlinie am Fahrzeuginnenverkleidungsteil geprüft werden kann.

Diese Aufgabe wird mit einem Verfahren mit den Merkmalen des Anspruches 1 gelöst.

Vorteilhaft werden die gespeicherten Einzelmesswerte nicht nur mit den Einzelreferenzwerten, sondern jeweils auch mit Einzelvergleichswerten verglichen, die dem betreffenden Einzelsensor und dem betreffenden Bearbeitungsort zugeordnet abgespeicherten sind und denen jeweils eine Lageabweichung von der Soll-Position zugeordnet ist. Durch Interpolation kann so aus den Einzelmesswerte auf die Ist-Position geschlossen werden.

Um mit einem geringen Rechenaufwand die Kontur und die Lage der Sollbruchlinie bestimmen zu können, wird vorteilhaft pro Bearbeitungsort nur für die Einzelsensoren der Einzelmesswert gespeichert und verglichen, die einen Mittenabstand zur Soll-Position des Bearbeitungsortes aufweisen, der kleiner einer maximalen Ausdehnung eines Einzelsensors ist.

Alternativ werden vorteilhaft pro Bearbeitungsort genau für die zwei Einzelsensoren der Einzelmesswert gespeichert und verglichen, für die der höchste Einzelreferenzwert, im Vergleich zu den anderen dem Bearbeitungsort zugeordneten Einzelreferenzwerten, erfasst wird.

Es ist von Vorteil, dass auf einen defekten Einzelsensor geschlossen werden kann, wenn wenigstens einer der ausgelesenen Einzelsensoren keinen Einzelmesswert oder ein mehr als 50% vom zugehörigen Einzelreferenzwert abweichenden Einzelmesswert liefert.

Vorteilhaft kann aus einer negativen Abweichung eines Einzelmesswertes vom zugeordneten Einzelreferenzwertes auf eine Lageabweichung der Ist-Position des Bearbeitungsortes von dessen Soll-Position weg vom Mittelpunkt des betreffenden Einzelsensors geschlossen werden und aus einer positiven Abweichung eines Einzelmesswertes vom zugeordneten Einzelreferenzwertes auf eine Lageabweichung der Ist-Position des Bearbeitungsortes von dessen Soll-Position hin zum Mittelpunkt des betreffenden Einzelsensors.

Es muss nicht zwingend für jeden Bearbeitungsort die Ist-Position mit den erfindungsgemäßen Verfahrensschritten ermittelt werden, sondern es kann auch für einzelne der Bearbeitungsorte dessen Ist-Position aus den ermittelten Ist-Positionen benachbarter Bearbeitungsorte ermittelt werden.

Genauere Ergebnisse erzielt man, wenn zeitgleich erfasste Einzelmesswerte in Abhängigkeit von einer unterschiedlichen Empfindlichkeit und/oder unterschiedlicher Ansprechzeiten der Einzelsensoren mit einer unterschiedlichen Wichtung in den Gesamtmesswert eingehen.

Für eine Entscheidung, ob es sich bei dem Fahrzeuginnenverkleidungsteil um ein Gutteil handelt, wird vorteilhaft eine Obergrenze für eine Anzahl von Lageabweichungen außerhalb eines Toleranzbereiches festgelegt und das Fahrzeuginnenverkleidungsteil als Gutteil bestätigt, wenn die Obergrenze nicht überschritten wird.

Für eine spätere Nachweisführung ist es von Vorteil, wenn die Ist-Positionen der Bearbeitungsorte den Soll-Positionen zugeordnet dokumentiert werden. Eine solche Dokumentation kann auch eine zweidimensionale Karte sein in der die Bearbeitungsorte lokal eingetragen sind und an denen z.B. die Einzelreferenzwerte und Einzelmesswerte angetragen sind oder die Größe der Einzelmesswerte lokal durch entsprechende Farbintensivität wiederspiegelt werden.

Nachfolgend wird die Erfindung an Ausführungsbeispielen anhand von Zeichnungen näher erläutert. Hierzu zeigen:

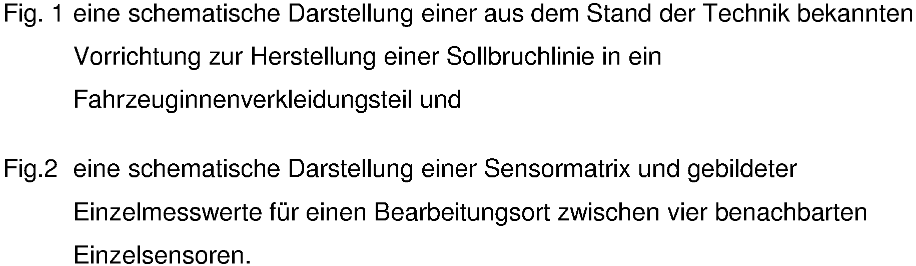

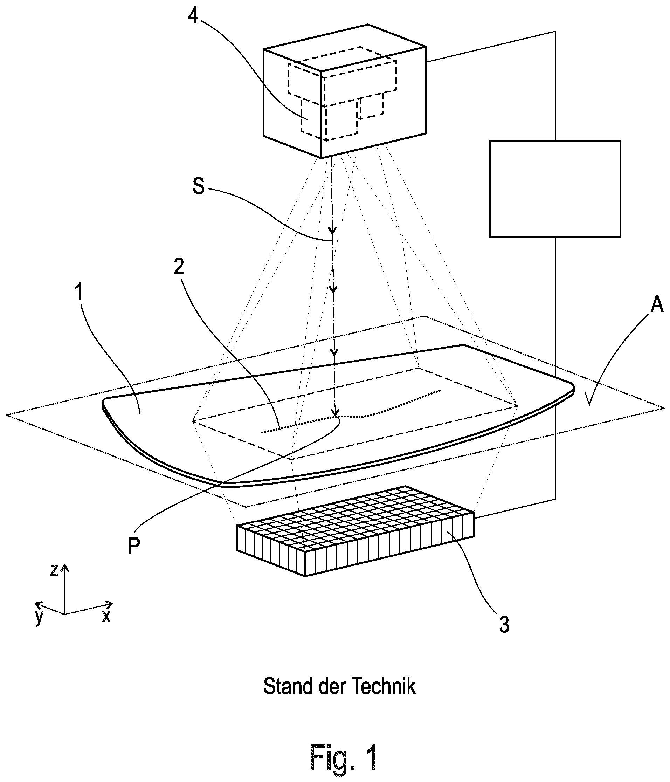

In **Fig. 1** ist eine schematische Darstellung einer aus dem Stand der Technik bekannten und zur Durchführung des Verfahrens geeignete Vorrichtung zur Herstellung einer Sollbruchlinie 2 in ein Fahrzeuginnenverkleidungsteil 1 dargestellt. Sie enthält eine Sensormatrix 3, einen hierzu definiert angeordneten Bearbeitungskopf mit einem Lasergenerator und einer Laserscaneinrichtung 4 sowie eine dazwischenliegende Arbeitsebene A, in der das zu bearbeitende Fahrzeuginnenverkleidungsteil 1 in einer definierten Lage zur Sensormatrix 3 und zur Laserscaneinrichtung 4 angeordnet wird, sowie eine Steuer- und Recheneinheit, die mit der Sensormatrix 3 und der Laserscaneinrichtung signaltechnisch verbunden ist. Die Arbeitsebene A ist an die Oberflächenkontur des Fahrzeuginnenverkleidungsteils 1 angepasst und muss keine geometrische Ebene sein. Durch die definierte Anordnung zur Sensormatrix ist bekannt welche Einzelsensoren bei der Herstellung jeweils eines Loches der Sollbruchlinie eine transmittierende Laserstrahlung detektieren, wenn die Sollbruchlinie mit einer Soll-Kontur in einer Soll-Lage hergestellt wird. Für die Soll-Lage der einzelnen Löcher sind den betreffenden Einzelsensoren jeweils zugeordnet Einzelreferenzwerte abgespeichert.

Das Verfahren beginnt in dem ein zu bearbeitendes Fahrzeuginnenverkleidungsteil 1, in der Arbeitsebene A zwischen der Sensormatrix 3 und der Laserscaneinrichtung 4 in einer vorgegebenen Relativlage zur Sensormatrix 3 angeordnet wird. Damit nimmt folglich auch eine zu erzeugende Sollbruchlinie 2 und die sie bildenden zu erzeugenden Löcher, eine vorgegebene Relativlage zur Laserscaneinrichtung 4 und zur Sensormatrix 3, und damit zu den Einzelsensoren der Sensormatrix 3, ein.

Die Laserscaneinrichtung 4 scannt einen Laserstrahl S auf einer Innenseite des Fahrzeuginnenverkleidungsteils 1, entlang der Sollbruchlinie 2, wobei ein Materialabtrag in Form von Löchern jeweils bis zu einer vorgegebenen Restwandstärke an jeweils einem Bearbeitungsort P entlang der Sollbruchlinie 2 bewirkt wird.

Ein jeweils nacheinander an den Bearbeitungsorten P transmittierender Anteil des Laserstrahles S verursacht Einzelmesswerte an Einzelsensoren der Sensormatrix von denen wenigstens einige erfasst werden. Üblich ist die Erfassung der Einzelmesswerte die oberhalb eines Schwellwertes liegen. Davon abweichend können die Einzelmesswerte ausgewählter Einzelsensoren am und um den jeweiligen Bearbeitungsort P erfasst werden. Je mehr Einzelmesswerte in den Gesamtmesswert eingehen, desto lageunabhängiger vom Auftreffpunkt des Laserstrahls (Bearbeitungsort) wird der Gesamtmesswert.

Aus zeitgleich erfassten Einzelmesswerten wird jeweils ein Gesamtmesswert für den jeweiligen Bearbeitungsort P gebildet und mit jeweils einem abgespeicherten Gesamtreferenzwert verglichen, dem die vorgegebene Restwandstärke zugeordnet ist. Der Laserstrahl S wird abgeschaltet, wenn jeweils der Gesamtmesswert den Gesamtreferenzwert erreicht hat.

Es ist erfindungswesentlich, dass wenigstens einige der Einzelmesswerte eines jeweiligen Gesamtmesswertes, bei dessen Erreichen des Gesamtreferenzwertes, dem betreffenden Einzelsensor und dem betreffenden Bearbeitungsort zugeordnet abgespeichert werden und jeweils mit einem dem betreffenden Einzelsensor und dem betreffenden Bearbeitungsort zugeordneten, abgespeicherten Einzelreferenzwert verglichen werden und sich ergebene Abweichungen zur Bewertung der Kontur und der Lage der Sollbruchlinie 2 verwendet werden.

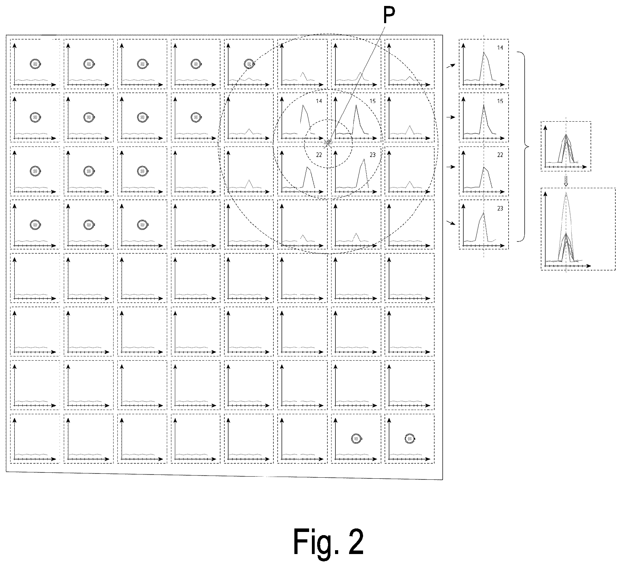

In **Fig. 2** sind eine schematische Darstellung einer Sensormatrix und einem Bearbeitungsort P zugeordnete Einzelmesswerte gezeigt. Die Soll-Position des Bearbeitungsortes P liegt hier beispielhaft exakt im Kreuzungspunkt zwischen vier benachbarten Einzelsensoren. Grundsätzlich können alle für die Bildung des Gesamtmesswertes erfassten Einzelmesswerte gespeichert und beachtet werden. Bevorzugt werden aber nur die erfassten Einzelmesswerte auch gespeichert und für den Vergleich mit Einzelreferenzwerten beachtet, die von den Einzelsensoren kommen deren Mittenabstand zur Soll-Position des Bearbeitungsortes einen vorgegebene Abstand nicht überschreitet und vorteilhaft kleiner einer maximalen Ausdehnung eines Einzelsensors ist, weshalb in diesem Beispiel die Einzelmesswerte der Einzelsensoren 14, 15, 22 und 23 beachtet werden und somit nur die Einzelmesswerte der vier unmittelbar am Bearbeitungsort P liegenden Einzelsensoren gespeichert werden. Liegt der Bearbeitungsort P relativ zu diesen Einzelsensoren 14, 15, 22 und 23 exakt dort wo auch seine Soll-Position ist, dann entsprechen die Einzelmesswerte jeweils den zugehörigen Einzelreferenzwerten. Abweichungen weisen auf eine Lageabweichung der Ist-Position zur Soll-Position hin. Ist die Ist-Position z.B. diagonal über den Einzelsensor 22 verschoben, vergrößert sich die Größe des Einzelmesswertes des Einzelsensors 22, während sich die Größe der drei Einzelmesswerte der Einzelsensoren 14, 15 und 23 verringert. In dem hier gezeigten Beispiel wird der Gesamtmesswert auch nur aus diesen vier Einzelmesswerten gebildet. Grundsätzlich reichen die Einzelmesswerte von zwei Einzelsensoren aus, um im Vergleich mit den betreffenden Einzelreferenzwerten auf eine Lageabweichung des Bearbeitungsortes von dessen Soll-Lage zu schließen. Mit der Vorgabe nur die Einzelmesswerte der Einzelsensoren zu verwenden deren Mittenabstand zur Soll-Position des Bearbeitungsortes kleiner einer maximalen Ausdehnung eines Einzelsensors ist, werden die Einzelmesswerte von maximal sechs Einzelsensoren beachtet. Nur in dem Sonderfall, wenn der Bearbeitungsort exakt auf den Mittelpunkt eines Einzelsensors trifft, wird bei dieser Vorgabe nur ein Einzelmesswert beachtet. In diesem Fall kann für diesen Bearbeitungsort die Ist-Position aus den ermittelten Ist-Positionen der benachbarten Bearbeitungsorte durch Interpolation ermittelt werden.

Soll die Restwandstärke über die gesamte Sollbruchlinie konstant sein, ist für alle Bearbeitungsorte P ein gleicher Gesamtreferenzwert gespeichert, der sich jedoch lokal unterschiedlich aus einer unterschiedlichen Anzahl und unterschiedlichen Einzelreferenzwerten ergibt. Die unterschiedlichen Einzelreferenzwerte ermöglichen die Lageermittlung.

Je nachdem welche Anforderungen an die Qualitätsbewertung gestellt werden, können z.B. Grenzwerte für die zulässigen Abweichungen der beachtete Einzelmesswerte abgespeichert sein, bei deren Überschreitung das an dem jeweiligen Bearbeitungsort P entstandene Loch mit seiner Ist-Position als außer Toleranz bewertet wird.

Alternativ können auf den jeweiligen Bearbeitungsort P bezogen zusätzlich zu den gespeicherten Einzelreferenzwerten, die der Soll-Position des Bearbeitungsortes P zugeordnet sind, Einzelvergleichswerte abgespeichert sein, die einer bestimmten Lageabweichung des Bearbeitungsortes P von der Soll-Position zugeordnet sind. Aus den an einem Bearbeitungsort P erhaltenen und gespeicherten Einzelmesswerten kann so mit Hilfe der Einzelvergleichswerte durch Interpolation auf die Ist-Position des Bearbeitungsortes P geschlossen werden.

Einzelmesswerte und entsprechend Einzelreferenzwerte und Einzelvergleichswerte sind aus den von den Einzelsensoren gebildeten elektrischen Signalen abgeleitete Werte. Das können z.B. die Signalamplituden oder das Integral unter dem Signal sein. Der Gesamtmesswert wird durch Summenbildung oder andere bekannte Verarbeitungsregeln aus den Einzelmesswerten gebildet. Dabei können die Einzelmesswerte mit einer unterschiedlichen Wichtung eingehen. Bei dem in **Fig. 2** dargestellten Beispiel gehen die Signalamplituden mit einer gleichen Wichtung in den Gesamtmesswert ein, ungeachtet möglicher Parametertoleranzen der Einzelsensoren. Praxisnaher erfolgt für die Einzelsensoren eine unterschiedliche Wichtung. Sie ergibt sich aus den Eigenschaften der Einzelsensoren, wie das Ansprechverhalten und dem Empfindlichkeitsbereich, die einer Schwankungsbreite unterliegen. Die Wichtung erfolgt, um diese Schwankungsbreite der Sensorparamter möglichst auszuschließen.

In einem Sonderfall befindet sich die Soll-Position des Bearbeitungsortes P horizontal und vertikal exakt mittig zwischen den Einzelsensoren 14 und 15. Der Mittenabstand der angrenzenden Einzelsensoren ist hier größer als die maximale Ausdehnung eines Einzelsensors, womit nur die Einzelmesswerte der Einzelsensoren 14 und 15 gespeichert und mit Einzelreferenzwerten verglichen werden. Hier wird deutlich, dass zur Bildung des Gesamtmesswertes auch die Einzelmesswerte angrenzender Einzelsensoren herangezogen werden müssen, da bei einer deutlichen Lageabweichung des Bearbeitungsortes von der Soll-Position die gewünschte Restwandstärke deutlich früher erreicht wird, als dass der Gesamtmesswert den Gesamtreferenzwert erreicht.

Mit dem erfindungsgemäßen Verfahren wird die an den jeweiligen Bearbeitungsorten noch vorhandene Restwandstärke überwacht und die Bearbeitung der Löcher an den Bearbeitungsorten gesteuert, indem bei Erreichen eines Gesamtreferenzwertes durch einen Gesamtmesswert die Bearbeitung lokal beendet wird. Gleichzeitig wird aus wenigstens einem Teil der den Gesamtmesswert bildenden Einzelmesswerten auf eine Lageabweichung der Ist-Position des Bearbeitungsortes von einer Soll-Position geschlossen. Dabei kann nicht nur festgestellt werden, dass eine Lageabweichung gegeben ist, sondern auch ob diese innerhalb einer vorgegebenen Toleranz liegt oder wo sich in Folge der Lageabweichung die Ist-Position befindet. Aus diesen Informationen zu den einzelnen Bearbeitungsorten kann auf die Kontur und die Lage der Sollbruchlinie am Fahrzeuginnenverkleidungsteil geschlossen werden.

### Bezugszeichenliste

- 1: Fahrzeuginnenverkleidungsteil
- 2: Sollbruchlinie
- 3: Sensormatrix

- P: Bearbeitungsort
- A: Arbeitsebene
- S: Laserstrahl

## Patentansprüche

1. Verfahren zur Herstellung einer Sollbruchlinie (2) in ein
Fahrzeuginnenverkleidungsteil (1), bei dem das Fahrzeuginnenverkleidungsteil (1) in einer Arbeitsebene (A) zwischen einer Sensormatrix (3) und einer Laserscaneinrichtung (4) angeordnet wird,
die Laserscaneinrichtung (4) einen Laserstrahl (S) auf einer Innenseite des Fahrzeuginnenverkleidungsteils (1) entlang der Sollbruchlinie (2) scannt, wobei ein Materialabtrag in Form von Löchern zeitlich nacheinander jeweils bis zu einer vorgegebenen Restwandstärke an jeweils einem Bearbeitungsort (P) entlang der Sollbruchlinie (2) bewirkt wird,
ein jeweils nacheinander an den Bearbeitungsorten (P) transmittierender Anteil des Laserstrahles (S) Einzelmesswerte für Einzelsensoren der Sensormatrix (3) verursacht, von denen wenigstens einige erfasst werden und
aus zeitgleich erfassten Einzelmesswerten jeweils ein Gesamtmesswert für den jeweiligen Bearbeitungsort (P) gebildet wird, der mit jeweils einem abgespeicherten Gesamtreferenzwert verglichen wird, dem die vorgegebene Restwandstärke zugeordnet ist, und
der Laserstrahl (S) abgeschaltet wird, wenn jeweils der Gesamtmesswert den Gesamtreferenzwert erreicht hat, **dadurch gekennzeichnet,**
**dass** das Anordnen des Fahrzeuginnenverkleidungsteils (1) in der Arbeitsebene (A) in einer bekannten Relativlage zur Sensormatrix (3) und zur Laserscaneinrichtung (4) erfolgt und
**dass** wenigstens einige der erfassten Einzelmesswerte eines jeweiligen Gesamtmesswertes, bei dessen Erreichen des Gesamtreferenzwertes, dem betreffenden Einzelsensor und dem betreffenden Bearbeitungsort (P) zugeordnet gespeichert werden und jeweils mit einem dem betreffenden Einzelsensor und dem betreffenden Bearbeitungsort (P) zugeordneten, gespeicherten Einzelreferenzwert, der einer Soll-Position des Bearbeitungsortes (P) zugeordnet ist, verglichen werden und sich ergebene Abweichungen zur Bewertung der Kontur und der Lage der Sollbruchlinie (2) verwendet werden.

2. Verfahren nach Anspruch 1, **dadurch gekennzeichnet,**
**dass** aus den zeitgleich erfassten, gespeicherten Einzelmesswerten eines jeweils den Gesamtreferenzwert erreichten Gesamtmesswertes eine Ist-Position des jeweiligen Bearbeitungsortes (P) abgeleitet wird und mit einer für den jeweiligen Bearbeitungsort (P) abgespeicherten Soll-Position verglichen wird und eine Qualitätsbewertung durch eine Prüfung der Lage und des Verlaufes der hergestellten Sollbruchlinie (2) erfolgt.

3. Verfahren nach Anspruch 2, **dadurch gekennzeichnet,**
**dass** pro Bearbeitungsort (P) nur für die Einzelsensoren der Einzelmesswert gespeichert und verglichen wird, die einen Mittenabstand zur Soll-Position des Bearbeitungsortes (P) aufweisen, der kleiner einer maximalen Ausdehnung eines Einzelsensors ist.

4. Verfahren nach Anspruch 2, **dadurch gekennzeichnet,**
**dass** pro Bearbeitungsort (P) genau für die zwei Einzelsensoren der Einzelmesswert gespeichert und verglichen wird, für die der höchste Einzelreferenzwert, im Vergleich zu den anderen dem Bearbeitungsort (P) zugeordneten Einzelreferenzwerten, erfasst wird.

5. Verfahren nach einem der vorherigen Ansprüche, **dadurch gekennzeichnet,**
**dass** auf einen defekten Einzelsensor geschlossen wird, wenn wenigstens einer der ausgelesenen Einzelsensoren keinen Einzelmesswert oder einen mehr als 50% vom zugehörigen Einzelreferenzwert abweichenden Einzelmesswert liefert.

6. Verfahren nach einem der vorherigen Ansprüche, **dadurch gekennzeichnet,**
**dass** aus einer Abweichung eines Einzelmesswertes vom zugeordneten Einzelreferenzwert auf eine Lageabweichung der Ist-Position des Bearbeitungsortes (P) von dessen Soll-Position geschlossen wird, wobei auf eine Lageabweichung weg vom Mittelpunkt des betreffenden Einzelsensors geschlossen wird, wenn der Einzelmesswert des betreffenden Sensors kleiner als der zugeordnete Einzelreferenzwert ist, und wobei auf eine Lageabweichung hin zum Mittelpunkt des betreffenden Einzelsensors geschlossen wird, wenn der Einzelmesswert größer als der zugeordnete Einzelreferenzwert ist.

7. Verfahren nach Anspruch 1, **dadurch gekennzeichnet,**
**dass** an einzelnen der Bearbeitungsorte (P) dessen Ist-Position aus den ermittelten Ist-Positionen benachbarter Bearbeitungsorte (P) durch Interpolation ermittelt wird.

8. Verfahren nach einem der vorherigen Ansprüche, **dadurch gekennzeichnet,**
**dass** die zeitgleich erfassten Einzelmesswerte in Abhängigkeit von einer unterschiedlichen Empfindlichkeit und/oder unterschiedlichen Ansprechzeiten der Einzelsensoren mit einer unterschiedlichen Wichtung in den Gesamtmesswert eingehen.

9. Verfahren nach einem der vorherigen Ansprüche, **dadurch gekennzeichnet,**
**dass** eine Obergrenze für eine Anzahl von Lageabweichungen außerhalb eines Toleranzbereiches festgelegt wird und das Fahrzeuginnenverkleidungsteil (1) als Gutteil bestätigt, wenn die Obergrenze nicht überschritten wird.

10. Verfahren nach einem der vorherigen Ansprüche, **dadurch gekennzeichnet,**
**dass** die Ist-Positionen der Bearbeitungsorte (P) den Soll-Positionen zugeordnet dokumentiert werden.

## Claims

1. A method for producing a break line (2) in a vehicle interior trim part (1), wherein the vehicle interior trim part (1) is arranged in a working plane (A) between a sensor matrix (3) and a laser scanning device (4),
the laser scanning device (4) scans a laser beam (S) on an inner side of the vehicle interior trim part (1), along the break line (2), wherein material removal in the form of holes is successively effected in each case down to a predetermined residual wall thickness at respective machining locations (P) along the break line (2),
a portion of the laser beam (S) transmitted successively at the machining locations (P) causes individual measured values for individual sensors of the sensor matrix (3), at least some of which are recorded, and
a respective total measured value is formed for each respective machining location (P) from individual measured values recorded simultaneously and is compared in each case with a respective stored total reference value to which the predetermined residual wall thickness is assigned, and
when the total measured value has reached the total reference value, the laser beam (S) is switched off, **characterized in that**
the vehicle interior trim part (1) is arranged in the working plane (A) in a known relative position to the sensor matrix (3) and to the laser scanning device (4), and
at least some of the recorded individual measured values of a respective total measured value, when the latter reaches the total reference value, are stored in a manner assigned to the respective individual sensor and the respective machining location (P) and are each compared with a stored individual reference value assigned to the respective individual sensor and the respective machining location (P), which stored individual reference value is assigned to a target position of the machining location (P), and any resulting deviations are used to evaluate the contour and position of the break line (2).

2. The method according to claim 1, **characterized in that**
an actual position of the respective processing location (P) is derived from the simultaneously recorded, stored individual measured values of a total measured value that has reached the total reference value in each case, said actual position is compared with a target position stored for the respective machining location (P) and the quality evaluation is carried out by inspecting the position and course of the produced break line (2).

3. The method according to claim 2, **characterized in that**
the individual measured value is stored and compared for each machining location (P) only for the individual sensors that have a center distance to the target position of the machining location (P) that is smaller than a maximum extension of any individual sensor.

4. The method according to claim 2, **characterized in that**
the individual measured value is stored and compared for each processing location (P) precisely for the two individual sensors for which the highest individual reference value, in comparison to the other individual reference values assigned to the machining location (P), is recorded.

5. The method according to any one of the preceding claims, **characterized in that** an individual sensor is concluded to be defective if at least one of the individual sensors read out provides no individual measured value or an individual measured value that deviates by more than 50% from the assigned individual reference value.

6. The method according to any one of the preceding claims, **characterized in that** a deviation of an individual measured value from the assigned individual reference value indicates a position deviation of the actual position of the machining location (P) from its target position, wherein a position deviation away from the center point of the relevant individual sensor is inferred if the individual measured value of the relevant sensor is smaller than the assigned individual reference value, and wherein a position deviation toward the center of the individual sensor concerned is inferred if the individual measured value is greater than the assigned individual reference value.

7. The method according to claim 1, **characterized in that**,
at individual machining locations (P), their respective actual position is determined by interpolation from the determined actual positions of adjacent machining locations (P).

8. The method according to any one of the preceding claims, **characterized in that** the simultaneously recorded individual measured values are included in the total measured value with a different weighting depending on a different sensitivity and/or different response times of the individual sensors.

9. The method according to any one of the preceding claims, **characterized in that** an upper limit for a number of position deviations outside a tolerance range is defined and the vehicle interior trim part (1) is confirmed as a usable part if the upper limit is not exceeded.

10. The method according to any one of the preceding claims, **characterized in that** the actual positions of the machining locations (P) are documented in relation to the target positions.

## Revendications

1. Procédé de fabrication d'une ligne de rupture (2) dans un élément d'habillage intérieur de véhicule (1), dans lequel l'élément d'habillage intérieur de véhicule (1) est disposé dans un plan de travail (A) entre une matrice de capteurs (3) et un dispositif de balayage laser (4),
le dispositif de balayage laser (4) balaye un faisceau laser (S) sur une face intérieure de l'élément d'habillage intérieur de véhicule (1) le long de la ligne de rupture (2), un enlèvement de matière sous forme de trous étant effectué successivement jusqu'à une épaisseur de paroi résiduelle prédéterminée à chaque lieu d'usinage (P) le long de la ligne de rupture (2),
une partie du faisceau laser (S) transmise successivement aux lieux d'usinage (P) génère des valeurs de mesure individuelles pour des capteurs individuels de la matrice de capteurs (3), dont au moins certaines sont enregistrées, et une valeur de mesure totale pour le lieu d'usinage concerné (P) est formée à partir des valeurs de mesure individuelles enregistrées simultanément, laquelle est comparée à une valeur de référence totale enregistrée à laquelle est attribuée l'épaisseur de paroi résiduelle prédéterminée, et
le faisceau laser (S) est désactivé lorsque la valeur de mesure totale atteint la valeur de référence totale, **caractérisé**
**en ce que** le positionnement de l'élément d'habillage intérieur de véhicule (1) dans le plan de travail (A) s'effectue dans une position relative connue par rapport à la matrice de capteurs (3) et au dispositif de balayage laser (4) et en ce qu'au moins certaines des valeurs individuelles enregistrées d'une valeur de mesure totale respective, lorsque celle-ci atteint la valeur de référence totale, sont enregistrées de manière associée au capteur individuel concerné et au lieu d'usinage concerné (P) et sont comparées à une valeur de référence individuelle enregistrée, associée au capteur individuel concerné et au lieu d'usinage concerné (P), qui est associée à une position de consigne du lieu d'usinage (P), et les écarts obtenus sont utilisés pour évaluer le contour et la position de la ligne de rupture (2).

2. Procédé selon la revendication 1, **caractérisé**
**en ce que**, à partir des valeurs de mesure individuelles enregistrées simultanément d'une valeur de mesure totale ayant atteint la valeur de référence totale à chaque fois, on déduit une position réelle du lieu d'usinage (P) concerné, on la compare à une position de consigne enregistrée pour le lieu d'usinage (P) concerné et on procède à une évaluation de la qualité en contrôlant la position et le tracé de la ligne de rupture (2) réalisée.

3. Procédé selon la revendication 2, **caractérisé**
**en ce que**, pour chaque lieu d'usinage (P), seule la valeur de mesure individuelle des capteurs individuels présentant un écart moyen par rapport à la position de consigne du lieu d'usinage (P) inférieur à une extension maximale d'un capteur individuel est enregistrée et comparée.

4. Procédé selon la revendication 2, **caractérisé**
**en ce que**, pour chaque lieu d'usinage (P), la valeur de mesure individuelle est enregistrée et comparée précisément pour les deux capteurs individuels pour lesquels la valeur de référence individuelle la plus élevée est enregistrée par rapport aux autres valeurs de référence individuelles attribuées au lieu d'usinage (P).

5. Procédé selon l'une quelconque des revendications précédentes, **caractérisé en ce qu'**un capteur individuel défectueux est détecté si au moins l'un des capteurs individuels lus ne fournit aucune valeur de mesure individuelle ou une valeur de mesure individuelle s'écartant de plus de 50 % de la valeur de référence individuelle correspondante.

6. Procédé selon l'une quelconque des revendications précédentes, **caractérisé en ce qu'**un écart entre une valeur de mesure individuelle et la valeur de référence individuelle attribuée permet de déduire un écart de position entre la position réelle du lieu d'usinage (P) et sa position de consigne, un écart de position s'éloignant du centre du capteur individuel concerné étant conclu lorsque la valeur de mesure individuelle du capteur concerné est inférieure à la valeur de référence individuelle attribuée, et un écart de position vers le centre du capteur individuel concerné est déduit lorsque la valeur de mesure individuelle est supérieure à la valeur de référence individuelle attribuée.

7. Procédé selon la revendication 1, **caractérisé**
**en ce que**, pour certains des lieux d'usinage (P), leur position réelle est déterminée par interpolation à partir des positions réelles déterminées des lieux d'usinage voisins (P).

8. Procédé selon l'une quelconque des revendications précédentes, **caractérisé en ce que** les valeurs de mesure individuelles enregistrées simultanément sont intégrées dans la valeur de mesure totale avec une pondération différente en fonction d'une sensibilité différente et/ou de temps de réponse différents des capteurs individuels.

9. Procédé selon l'une quelconque des revendications précédentes, **caractérisé en ce qu'**une limite supérieure est fixée pour un nombre d'écarts de position hors d'une plage de tolérance et que l'élément d'habillage intérieur de véhicule (1) est confirmé comme étant une pièce conforme lorsque la limite supérieure n'est pas dépassée.

10. Procédé selon l'une quelconque des revendications précédentes, **caractérisé en ce que** les positions réelles des lieux d'usinage (P) sont documentées de manière attribuée aux positions de consigne.
